# EUROPEAN PATENT SPECIFICATION

(11) **EP 2 613 513 B1**
(45) Date of publication and mention of the grant of the patent: **01.05.2019**
(21) Application number: 12305005.6
(22) Date of filing: 03.01.2012
(51) Int. Cl.: G06Q 20/10, G06Q 20/16, G06Q 20/20, H04M 15/00, G06Q 20/32

(54) **Transfer of credit from a mobile terminal**
Übertragung eines Kredits eines mobilen Endgeräts
Transfert de crédit à partir d'un terminal mobile

(43) Date of publication of application: 10.07.2013
(73) Proprietor: Alcatel Lucent, 91620 Nozay (FR)
(72) Inventor: Grover, Varun, 122002 GURGAON (IN)
(74) Representative: Nokia EPO representatives

(56) References cited:
- EP-A1- 1 315 131
- EP-A2- 0 708 547
- WO-A1-98/47116
- WO-A2-01/63568

## Description

### FIELD OF THE INVENTION

The present invention relates to a system for transferring credit in a telecommunication network.

### BACKGROUND

There is a need to have easy availability of cash anytime for people who might not be having an ATM (Automatic Teller Machine) card or even a bank account but are having a mobile phone connection. There is also a need for people who require immediate cash, have an ATM card and a/many bank account/s but not having an access to ATM services due to unavailability of an ATM or due to the ATM machine not functioning properly.

EP 0708547 and WO 98/47116 relate to the area of credit transfers between a reseller and a user of a mobile telephone.SUMMARY

To remedy the problems referred to hereinabove, a method for transferring credit from an account held by a user owning a mobile terminal to an account held by a reseller owning a communication device in a billing server, comprises the following steps in an application server able to communicate with the mobile terminal, the communication device and the billing server through a telecommunication network:
receiving a first message sent by the mobile terminal, the message comprising at least an authentication code, a reseller identifier and an amount of credit,
sending a request to the communication device, the request comprising a demand of credit transfer,
after reception of a response sent by the communication device, sending a second message to the billing server to perform a credit transfer of said amount of credit from the account held by the user to the account held by the reseller, if the received response comprises an authentication code identical to the authentication code comprised in the received first message.

For an immediate fulfillment of cash availability, the user requires advantageously nothing else but a mobile terminal with a prepaid or postpaid connection. In case of a postpaid account, the user will be making use of his normally unused credit limit (which is normally set by an operator to a level substantially higher than the average usage per month of a particular user). In case of a prepaid account, the user will be able to encash his remaining balance.

In an embodiment, the first message can be a USSD message and can comprise an access code, the first message being first received by a USSD gateway that routes the first message to the application server identified by the access code.

In an embodiment, an identifier of the reseller can be stored in the application server in correspondence with an identifier of an account of the reseller in the billing server, and an identifier of the user can be stored in the application server in correspondence with an identifier of an account of the user in the billing server.

In an embodiment, the identifier of the reseller can be stored in correspondence with a call number of the communication device in the application server and the first message can comprise an identifier of the reseller.

In an embodiment, the application server can retrieve the identifier of the user from the received first message, the identifier being included in the first message or deduced from the first message.

In an embodiment, the second message sent by the application server to the billing server can comprise the identifier of an account of the reseller, the identifier of an account of the user, and a command to perform a transaction of credit transfer by said amount of credit.

In an embodiment, the application server can send a confirmation message to the mobile terminal, the confirmation message comprising information on the performed credit transfer.

A further object of the invention is an application server for transferring credit from an account held by a user owning a mobile terminal to an account held by a reseller owning a communication device in a billing server, the application server being able to communicate with the mobile terminal, the communication device and the billing server through a telecommunication network, the application server comprising:
means for receiving a first message sent by the mobile terminal, the message comprising at least an authentication code, a reseller identifier and an amount of credit,
means for sending a request to the communication device, the request comprising a demand of credit transfer,
means for sending a second message to the billing server to perform a credit transfer of said amount of credit from the account held by the user to the account held by the reseller, after reception of a response sent by the communication device, if the received response comprises an authentication code identical to the authentication code comprised in the received first message.

The invention relates further to a computer program adapted to be executed in a server for performing a transfer of credit, said program including instructions which, when the program is executed in said server, execute the steps of the method of the invention.

### BRIEF DESCRIPTION OF THE FIGURES

Some embodiments of the present invention are now described, by way of example only, and with reference to the accompanying drawings, in which:
- FIG. 1 is a schematic block-diagram of a communication system according to an embodiment of the invention,
- FIG. 2 is a flowchart showing steps performed to execute a method for transferring credit from a mobile terminal in a telecommunication network according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

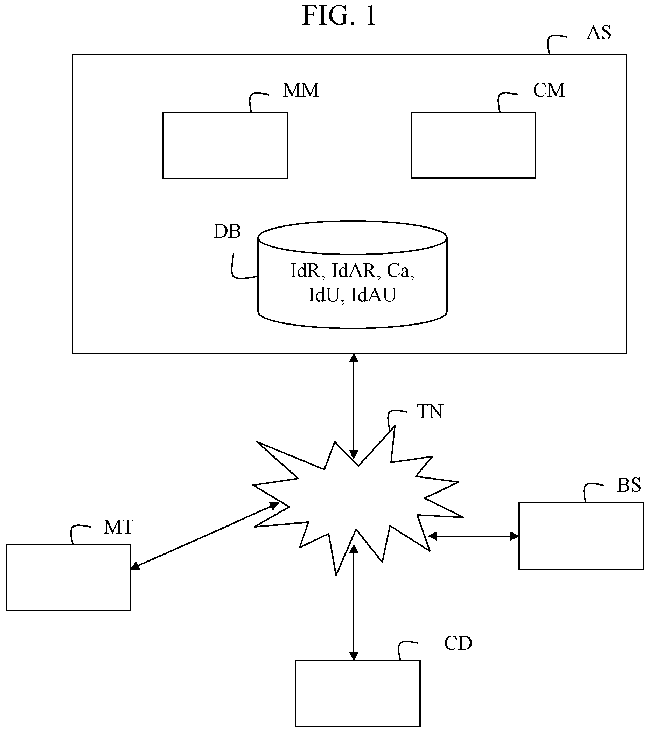

Referring to FIG. 1, a communication system comprises an application server CS which is able to communicate with a billing server BS, a mobile terminal MT and a communication device CD through a telecommunication network TN.

The telecommunication network TN is wireless network, eventually combined with other wired and wireless networks.

The mobile terminal MT can be a radio communication mobile terminal. For example, the terminal MT is a mobile phone, or is a communicating Personal Digital Assistant PDA, or an intelligent telephone like SmartPhone.

In an example, the mobile terminal MT is a cellular mobile radio communication terminal, connected by a channel to a radio access network comprising the network of a fixed radio communication network, eg GSM (Global System for Mobile communications) or UMTS (Universal Mobile Telecommunications System) or LTE (Long Term Evolution).

The communication device CD may be an entity similar to the mobile terminal MT.

It is considered that the mobile terminal is owned by a user who is a subscriber of the telecommunication network and who wishes to have cash credit at his disposal by asking a reseller who owns the communication device CD. In one embodiment, the user owns an account held be the telecommunication network operator, like a mobile account being a prepaid or postpaid balance account, but does not have any bank account. The user may wish to convert the credit present on his account into money that can be retrieved by the reseller in form of cash money to give to the user or that can serve as a way of payment for purchasing a good for example.

The application server AS is a server included in the telecommunication network TN able to handle USSD (Unstructured Supplementary Service Data) message and SMS (Short Message Service) messages.

The application server AS comprises a messaging module MM and a controlling module CM. The application server AS may be a server SCP (Service Control Point).

The application server AS stores in a database DB a profile of each reseller registered to the service provided by the application server. The database DB memorizes an identifier IdR of each reseller in correspondence with a call number associated with the communication device CD, and optionally in correspondence with an authentication code Ca.

The messaging module MM acts as an interface handling exchange of messages with the mobile terminal MT and the communication device CD.

The billing server BS stores an account for the user owning the mobile terminal MT and an account for the reseller owning the communication device CD. The billing server BS may be able to communicate with bank servers in order to convert the credit present in an account into money for an account managed by the bank server, in case the reseller needs any action or agreement from his bank to use credit received on his mobile account as a way of transaction, such as a purchase of a good in the store. The money available to the user corresponds to his mobile balance which he may convert to cash for his personal use or credit it to reseller's account as a payment for a product/service purchased from the reseller.

In the database DB is stored the identifier IdR of the reseller in correspondence with an identifier IdAR of an account of the reseller in the billing server BS. In the database is also stored an identifier IdU of the user in correspondence with an identifier IdAU of an account of the user in the billing server BS. The identifier IdR of the reseller may be an assigned number. The identifier IdU of the user may be an assigned number or a number related to the user, such as the IMSI identity (International Mobile Subscriber Identity).

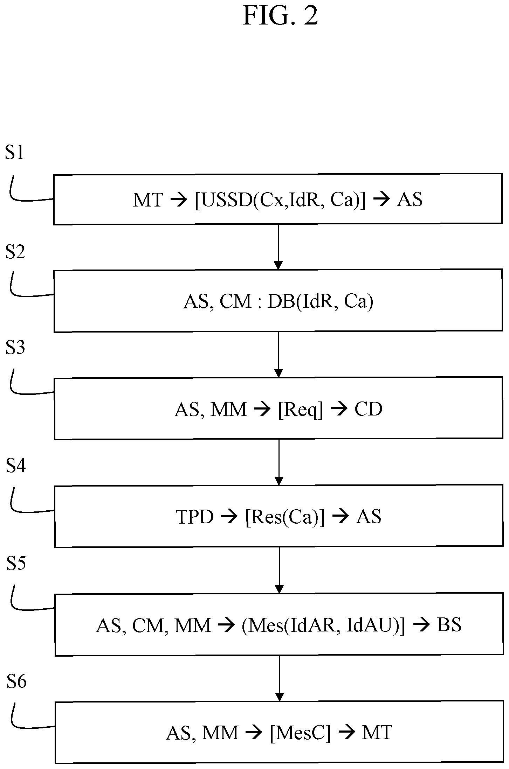

With reference to FIG. 2, a method for transferring credit according to one embodiment of the invention comprises steps S1 to S6 executed automatically within the communication system.

At step S1, a user owning a mobile terminal MT is present at a place where a reseller owning a communication device CD can propose cash money retrieval.

The mobile terminal MT sends a USSD message towards the application server AS. The USSD message comprises an access code Cx to initiate the transaction service by the application server, the reseller identifier IdR, an authentication code Ca, and the amount of credit wished by the user. In the telecommunication network, the USSD message is received by a USSD gateway that routes then the USSD message to the application server identified by the access code.

For example, the USSD message can be under the following form: *121*12345*<989>*500#, where 121 is the access code Cx, 12345 is the reseller identifier IdR, 989 is authentication code Ca and 500 is the amount of credit. The authentication code Ca is a key composed of three or more digits that can be pre-shared by the user and the reseller, or already stored in the application server AS and known by the reseller that can give it to the user.

At step S2, the messaging module MM of the application server AS receives the USSD message. The controlling module CM checks the reseller identifier IdR in the database DB and stores temporarily the authentication code Ca in correspondence with the identifier IdR. In case the reseller identifier IdR is already stored in correspondence with the identifier IdR in the database DB, the application server AS only check the presence of the reseller identifier IdR and the authentication code Ca in the database DB.

The controlling module CM of the application server AS identifies also the call number associated with the communication device CD that is stored in correspondence with the identifier IdR in the database DB.

Eventually, the application server AS identifies also the identifier IdU of the user. The identifier IdU can be an assigned number that is entered by the user and included in the USSD message, or the identifier IdU can be deduced from the USSD message if the identifier IdU is the mobile terminal call number or IMEI. In both cases, the application server AS can identify the user and an identifier IdAU of an account of the user in the billing server BS.

The identifier IdU of the user may be an assigned number or a number related to the mobile terminal MT, such as the call number or the IMEI (International Mobile Equipment Identity).

At step S3, the messaging module MM of the application server AS sends a request Req to the communication device CD, the request being under the format of a SMS message for example. The request comprises a demand of credit transfer, for a cash money retrieval, for the amount included in the USSD message and a demand of confirmation by the reseller. The request comprises also an identifier of a user, for example the call number of the mobile terminal MT.

At step S4, the communication device CD receives the request Req. If the reseller acknowledges the transaction, he can enter the authentication code Ca. The communication device CD sends a response Res to the application server AS, the response being under the format of a SMS message for example. The response Res comprises the authentication code Ca that can be interpreted as a confirmation of transaction.

At step S5, the messaging module MM of the application server AS receives the response Res and checks if the authentication code received in the response is identical to the authentication code received in the USSD message.

The controlling module CM of the application server AS retrieves the identifier IdAR of an account of the reseller in the billing server BS by means of the identifier IdR of the reseller. The application server AS retrieves also the identifier IdAU of an account of the user by means of the identifier IdU of the user.

The controlling module CM commands the message module MM to send a message Mes to the billing server BS in order to debit the account of the user of the amount of credit indicated in the USSD message and to credit the account of the reseller of the same amount of credit. For that, the message Mes comprises the identifier IdAR of an account of the reseller, the identifier IdAU of an account of the user, and a command to perform a transaction of credit transfer by the amount of credit.

At step S6, the billing server BS performs the transaction of credit transfer and sends a message back to the application server AS indicating that the credit transfer has been performed.

The messaging module MM of the application server AS then sends a confirmation message MesC to the mobile terminal MT, the confirmation message MesC comprising information on the performed credit transfer.

The reseller can then give an amount of money to the user according to the amount of credit that has been transferred.

Alternatively, the amount of credit received by the reseller on its account can be a way of payment, for example for purchasing a good in the store held by the reseller.

Optionally, the messaging module MM of the application server AS sends also a confirmation message to the communication device Cd, comprising information on the performed credit transfer.

Finally, the credit transfer from subscriber to reseller can be explained as follows: after credit transfer request and successful authentication, the said amount to be debited from the user's mobile account and the same amount to be credited to the bank account of the reseller by way of a settlement from the network operator to the reseller for the current transaction.

In one embodiment for a user having a postpaid subscription, a "credit limit" is set by the operator based on the user's credit history, usage patterns etc. and is set to a limit substantially higher than the average bill per month of a particular user. This limit defines how much credit in terms of service usage charges can be allowed to a particular user.

It is intended to use this credit limit of the users to actually be able to withdraw amount up to this limit, and after a positive feedback of this feature from the end users (trend analysis of usage of this service) and timely repayment of bills by the user, the operator may increase the credit limit of the users to encourage more withdrawals through this method.

This cash withdrawal by a postpaid user could be seen as analogous to a credit card user withdrawing cash from his credit card account.

In one embodiment for a user having a prepaid subscription, a balance is maintained in his mobile connection account by the operator. This balance is a purchased balance and is essentially owned by the user.

The user may get his account refilled at a given date with excess money (based on availability of cash with him) and keep it in his mobile account for as long as he wishes. He may use the amount to make calls, surf internet etc. and also withdraw cash out of his mobile account whenever needed.

This cash withdrawal from a prepaid mobile account could be seen as analogous to a bank account holding user withdrawing cash from his account subject to a maximum limit of his bank account balance.

The invention described here relates to a method and a server for a transfer of credit. In an embodiment, the steps of the method of the invention are determined by the instructions of a computer program incorporated in a server such as the application server AS according to the invention. The program includes program instructions which, when said program is executed in a processor of the server the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for transferring credit from an account held by a user owning a mobile terminal (MT) to an account held by a reseller owning a communication device (CD) and being present at a same place as the user, the accounts being stored in a billing server (BS), comprising the following steps in an application server (AS) able to communicate with the mobile terminal (MT), the communication device (CD) and the billing server (BS) through a telecommunication network (TN):
receiving (S2) a first message sent by the mobile terminal (MT), the message comprising at least an authentication code (Ca) that is a key pre-shared by the user and the reseller, a reseller identifier (IdR) and an amount of credit,
wherein the first message is a USSD message and comprises an access code (Cx), the first message being first received by a USSD gateway that routes the first message to the application server (AS) identified by the access code (Cx),
sending (S3) a request (Req) to the communication device (CD), the request comprising a demand of credit transfer,
after reception of a response (Res) sent by the communication device (CD), sending (S5) a second message (Mes) to the billing server (BS) to perform a credit transfer of said amount of credit from the account held by the user to the account held by the reseller, if the received response (Res) comprises an authentication code identical to the authentication code (Ca) comprised in the received first message.

2. A method according to claim 1, an identifier (IdR) of the reseller is stored in the application server (AS) in correspondence with an identifier (IdAR) of an account of the reseller in the billing server (BS), and an identifier (IdU) of the user is stored in the application server (AS) in correspondence with an identifier (IdAU) of an account of the user in the billing server (BS).

3. A method according to claim 2, wherein the identifier (IdR) of the reseller is stored in correspondence with a call number of the communication device (CD) in the application server (AS) and the first message comprises an identifier (IdR) of the reseller.

4. A method according to claim 2 or 3, wherein the application server (AS) retrieves the identifier (IdU) of the user from the received first message, the identifier (IdU) being included in the first message or deduced from the first message.

5. A method according to any of claims 2 to 4, wherein the second message (Mes) sent by the application server (AS) to the billing server (BS) comprises the identifier (IdAR) of an account of the reseller, the identifier (IdAU) of an account of the user, and a command to perform a transaction of credit transfer by said amount of credit.

6. A method according to any of claims 1 to 5, wherein the application server (AS) sends a confirmation message (MesC) to the mobile terminal (MT), the confirmation message (MesC) comprising information on the performed credit transfer.

7. Application server (AS) for transferring credit from an account held by a user owning a mobile terminal (MT) to an account held by a reseller owning a communication device (CD) and being present at a same place as the user, the accounts being stored in a billing server (BS), the application server (AS) being able to communicate with the mobile terminal (MT), the communication device (CD) and the billing server (BS) through a telecommunication network (TN), the application server (AS) comprising:
means (MM) for receiving a first message sent by the mobile terminal (MT), the message comprising at least an authentication code (Ca) that is a key pre-shared by the user and the reseller, a reseller identifier (IdR) and an amount of credit,
wherein the first message is a USSD message and comprises an access code (Cx), the first message being first received by a USSD gateway that routes the first message to the application server (AS) identified by the access code (Cx),
means (MM) for sending a request (Req) to the communication device (CD), the request comprising a demand of credit transfer,
means for sending (MM) a second message (Mes) to the billing server (BS) to perform a credit transfer of said amount of credit from the account held by the user to the account held by the reseller, after reception of a response (Res) sent by the communication device (CD), if the received response (Res) comprises an authentication code identical to the authentication code (Ca) comprised in the received first message.

8. A computer program adapted to be executed in an application server (AS) for transferring credit from an account held by a user owning a mobile terminal (MT) to an account held by a reseller owning a communication device (CD) and being present at a same place as the user, the accounts being stored in a billing server (BS), the application server (AS) being able to communicate with the mobile terminal (MT), the communication device (CD) and the billing server (BS) through a telecommunication network (TN), said program including instructions which, when said program is executed in said application server, execute the following steps :
receiving (S2) a first message sent by the mobile terminal (MT), the message comprising at least an authentication code (Ca) that is a key pre-shared by the user and the reseller, a reseller identifier (IdR) and an amount of credit,
wherein the first message is a USSD message and comprises an access code (Cx), the first message being first received by a USSD gateway that routes the first message to the application server (AS) identified by the access code (Cx),
sending (S3) a request (Req) to the communication device (CD), the request comprising a demand of credit transfer,
after reception of a response (Res) sent by the communication device (CD), sending (S5) a second message (Mes) to the billing server (BS) to perform a credit transfer of said amount of credit from the account held by the user to the account held by the reseller, if the received response (Res) comprises an authentication code identical to the authentication code (Ca) comprised in the received first message.

## Patentansprüche

1. Verfahren zum Transferieren eines Guthabens von einem Konto, das von einem Benutzer unterhalten wird, der ein mobiles Endgerät (MT) besitzt, zu einem Konto, das von einem Wiederverkäufer unterhalten wird, der eine Kommunikationsvorrichtung (CD) besitzt und an einem selben Ort anwesend ist wie der Benutzer, wobei die Konten auf einem Abrechnungsserver (BS) gespeichert sind, das auf einem Anwendungsserver (AS), der in der Lage ist, über ein Telekommunikationsnetzwerk (TN) mit dem mobilen Endgerät (MT), der Kommunikationsvorrichtung (CD) und dem Abrechnungsserver (BS) zu kommunizieren, die folgenden Schritte umfasst:
Empfangen (S2) einer ersten Nachricht, die vom mobilen Endgerät (MT) gesendet wurde, wobei die Nachricht mindestens einen Authentifizierungscode (Ca), bei dem es sich um einen Pre-Shared Key des Benutzers und des Wiederverkäufers handelt, eine Wiederverkäuferkennung (IdR) und einen Guthabenbetrag umfasst,
wobei die erste Nachricht eine USSD-Nachricht ist und einen Zugangscode (Cx) umfasst, wobei die erste Nachricht zuerst von einem USSD-Gateway empfangen wird,
das die erste Nachricht zum Anwendungsserver (AS) leitet, der vom Zugangscode (Cx) identifiziert wird, Senden (S3) einer Anforderung (Req) an die Kommunikationsvorrichtung (CD), wobei die Anforderung eine Forderung eines Guthabentransfers umfasst,
nach Empfang einer Antwort (Res), die von der Kommunikationsvorrichtung (CD) gesendet wurde, Senden (S5) einer zweiten Nachricht (Mes) an den Abrechnungsserver (BS), um einen Guthabentransfer des Guthabenbetrags vom Konto, das vom Benutzer unterhalten wird, zum Konto, das vom Wiederverkäufer unterhalten wird, durchzuführen, wenn die empfangene Antwort (Res) einen Authentifizierungscode umfasst, der mit dem Authentifizierungscode (Ca), der in der empfangenen ersten Nachricht umfasst ist, identisch ist.

2. Verfahren nach Anspruch 1, wobei eine Kennung (IdR) des Wiederverkäufers in Entsprechung zu einer Kennung (IdAR) eines Kontos des Wiederverkäufers auf dem Abrechnungsserver (BS) auf dem Anwendungsserver (AS) gespeichert ist und eine Kennung (IdU) des Benutzers in Entsprechung zu einer Kennung (IdAU) eines Kontos des Benutzers auf dem Abrechnungsserver (BS) auf dem Anwendungsserver (AS) gespeichert ist.

3. Verfahren nach Anspruch 2, wobei die Kennung (IdR) des Wiederverkäufers in Entsprechung zu einer Rufnummer der Kommunikationsvorrichtung (CD) auf dem Anwendungsserver (AS) gespeichert ist und die erste Nachricht eine Kennung (IdR) des Wiederverkäufers umfasst.

4. Verfahren nach Anspruch 2 oder 3, wobei der Anwendungsserver (AS) die Kennung (IdU) des Benutzers aus der empfangenen ersten Nachricht abruft, wobei die Kennung (IdU) in der ersten Nachricht beinhaltet ist oder aus der ersten Nachricht abgeleitet wird.

5. Verfahren nach einem der Ansprüche 2 bis 4, wobei die zweite Nachricht (Mes), die vom Anwendungsserver (AS) an den Abrechnungsserver (BS) gesendet wurde, die Kennung (IdAR) eines Kontos des Wiederverkäufers, die Kennung (IdAU) eines Kontos des Benutzers und einen Befehl zum Durchführen einer Transaktion eines Guthabentransfers für den Guthabenbetrag umfasst.

6. Verfahren nach einem der Ansprüche 1 bis 5, wobei der Anwendungsserver (AS) eine Bestätigungsnachricht (MesC) an das mobile Endgerät (MT) sendet, wobei die Bestätigungsnachricht (MesC) Informationen zum durchgeführten Guthabentransfer umfasst.

7. Anwendungsserver (AS) zum Transferieren eines Guthabens von einem Konto, das von einem Benutzer unterhalten wird, der ein mobiles Endgerät (MT) besitzt, zu einem Konto, das von einem Wiederverkäufer unterhalten wird, der eine Kommunikationsvorrichtung (CD) besitzt und an einem selben Ort anwesend ist wie der Benutzer, wobei die Konten auf einem Abrechnungsserver (BS) gespeichert sind, wobei der Anwendungsserver (AS) in der Lage ist, über ein Telekommunikationsnetzwerk (TN) mit dem mobilen Endgerät (MT), der Kommunikationsvorrichtung (CD) und dem Abrechnungsserver (BS) zu kommunizieren, wobei der Anwendungsserver (AS) Folgendes umfasst:
Mittel (MM) zum Empfangen einer ersten Nachricht, die vom mobilen Endgerät (MT) gesendet wurde, wobei die Nachricht mindestens einen Authentifizierungscode (Ca), bei dem es sich um einen Pre-Shared Key des Benutzers und des Wiederverkäufers handelt, eine Wiederverkäuferkennung (IdR) und einen Guthabenbetrag umfasst,
wobei die erste Nachricht eine USSD-Nachricht ist und einen Zugangscode (Cx) umfasst, wobei die erste Nachricht zuerst von einem USSD-Gateway empfangen wird, das die erste Nachricht zum Anwendungsserver (AS) leitet, der vom Zugangscode (Cx) identifiziert wird,
Mittel (MM) zum Senden einer Anforderung (Req) an die Kommunikationsvorrichtung (CD), wobei die Anforderung eine Forderung eines Guthabentransfers umfasst,
Mittel zum Senden (MM) einer zweiten Nachricht (Mes) an den Abrechnungsserver (BS), um nach Empfang einer Antwort (Res), die von der Kommunikationsvorrichtung (CD) gesendet wurde, einen Guthabentransfer des Guthabenbetrags vom Konto, das vom Benutzer unterhalten wird, zum Konto, das vom Wiederverkäufer unterhalten wird, durchzuführen, wenn die empfangene Antwort (Res) einen Authentifizierungscode umfasst, der mit dem Authentifizierungscode (Ca), der in der empfangenen ersten Nachricht umfasst ist, identisch ist.

8. Computerprogramm, das angepasst ist, zum Transferieren eines Guthabens von einem Konto, das von einem Benutzer unterhalten wird, der ein mobiles Endgerät (MT) besitzt, zu einem Konto, das von einem Wiederverkäufer unterhalten wird, der eine Kommunikationsvorrichtung (CD) besitzt und an einem selben Ort anwesend ist wie der Benutzer, auf einem Anwendungsserver (AS) ausgeführt zu werden, wobei die Konten auf einem Abrechnungsserver (BS) gespeichert sind, wobei der Anwendungsserver (AS) in der Lage ist, über ein Telekommunikationsnetzwerk (TN) mit dem mobilen Endgerät (MT), der Kommunikationsvorrichtung (CD) und dem Abrechnungsserver (BS) zu kommunizieren, wobei das Programm Anweisungen beinhaltet, die, wenn das Programm auf dem Anwendungsserver ausgeführt wird, die folgenden Schritte ausführen:
Empfangen (S2) einer ersten Nachricht, die vom mobilen Endgerät (MT) gesendet wurde, wobei die Nachricht mindestens einen Authentifizierungscode (Ca), bei dem es sich um einen Pre-Shared Key des Benutzers und des Wiederverkäufers handelt, eine Wiederverkäuferkennung (IdR) und einen Guthabenbetrag umfasst,
wobei die erste Nachricht eine USSD-Nachricht ist und einen Zugangscode (Cx) umfasst, wobei die erste Nachricht zuerst von einem USSD-Gateway empfangen wird,
das die erste Nachricht zum Anwendungsserver (AS) leitet, der vom Zugangscode (Cx) identifiziert wird, Senden (S3) einer Anforderung (Req) an die Kommunikationsvorrichtung (CD), wobei die Anforderung eine Forderung eines Guthabentransfers umfasst,
nach Empfang einer Antwort (Res), die von der Kommunikationsvorrichtung (CD) gesendet wurde, Senden (S5) einer zweiten Nachricht (Mes) an den Abrechnungsserver (BS), um einen Guthabentransfer des Guthabenbetrags vom Konto, das vom Benutzer unterhalten wird, zum Konto, das vom Wiederverkäufer unterhalten wird, durchzuführen, wenn die empfangene Antwort (Res) einen Authentifizierungscode umfasst, der mit dem Authentifizierungscode (Ca), der in der empfangenen ersten Nachricht umfasst ist, identisch ist.

## Revendications

1. Procédé pour transférer du crédit depuis un compte tenu par un utilisateur possédant un terminal mobile (MT) vers un compte tenu par un revendeur possédant un dispositif de communication (CD) et étant présent à un même endroit que l'utilisateur, les comptes étant stockés dans un serveur de facturation (BS), comprenant les étapes suivantes dans un serveur d'application (AS) pouvant communiquer avec le terminal mobile (MT), le dispositif de communication (CD) et le serveur de facturation (BS) via un réseau de télécommunication (TN) :
la réception (S2) d'un premier message envoyé par le terminal mobile (MT), le message comprenant au moins un code d'authentification (Ca) qui est une clé pré-partagée par l'utilisateur et le revendeur, un identifiant de revendeur (IdR) et une somme de crédit,
dans lequel le premier message est un message USSD et comprend un code d'accès (Cx), le premier message étant d'abord reçu par une passerelle USSD qui route le premier message vers le serveur d'application (AS) identifié par le code d'accès (Cx),
l'envoi (S3) d'une demande (Req) au dispositif de communication (CD), la demande comprenant un ordre de transfert de crédit,
après réception d'une réponse (Res) envoyée par le dispositif de communication (CD), l'envoi (S5) d'un second message (Mes) au serveur de facturation (BS) pour effectuer un transfert de crédit de ladite somme de crédit depuis le compte tenu par l'utilisateur vers le compte tenu par le revendeur, si la réponse (Res) reçue comprend un code d'authentification identique au code d'authentification (Ca) compris dans le premier message reçu.

2. Procédé selon la revendication 1, un identifiant (IdR) du revendeur étant stocké dans le serveur d'application (AS) en correspondance avec un identifiant (IdAR) d'un compte du revendeur dans le serveur de facturation (BS), et un identifiant (IdU) de l'utilisateur est stocké dans le serveur d'application (AS) en correspondance avec un identifiant (IdAU) d'un compte de l'utilisateur dans le serveur de facturation (BS) .

3. Procédé selon la revendication 2, dans lequel l'identifiant (IdR) du revendeur est stocké en correspondance avec un numéro d'appel du dispositif de communication (CD) dans le serveur d'application (AS) et le premier message comprend un identifiant (IdR) du revendeur.

4. Procédé selon la revendication 2 ou 3, dans lequel le serveur d'application (AS) extrait l'identifiant (IdU) de l'utilisateur du premier message reçu, l'identifiant (IdU) étant compris dans le premier message ou déduit à partir du premier message.

5. Procédé selon l'une quelconque des revendications 2 à 4, dans lequel le second message (Mes) envoyé par le serveur d'application (AS) au serveur de facturation (BS) comprend l'identifiant (IdAR) d'un compte du revendeur, l'identifiant (IdAU) d'un compte de l'utilisateur, et une instruction pour effectuer une transaction de transfert de crédit selon ladite somme de crédit.

6. Procédé selon l'une quelconque des revendications 1 à 5, dans lequel le serveur d'application (AS) envoie un message de confirmation (MesC) au terminal mobile (MT), le message de confirmation (MesC) comprenant des informations sur le transfert de crédit effectué.

7. Serveur d'application (AS) pour transférer du crédit depuis un compte tenu par un utilisateur possédant un terminal mobile (MT) vers un compte tenu par un revendeur possédant un dispositif de communication (CD) et étant présent à un même endroit que l'utilisateur, les comptes étant stockés dans un serveur de facturation (BS), le serveur d'application (AS) pouvant communiquer avec le terminal mobile (MT), le dispositif de communication (CD) et le serveur de facturation (BS) via un réseau de télécommunication (TN), le serveur d'application (AS) comprenant :
un moyen (MM) pour recevoir un premier message envoyé par le terminal mobile (MT), le message comprenant au moins un code d'authentification (Ca) qui est une clé pré-partagée par l'utilisateur et le revendeur, un identifiant de revendeur (IdR) et une somme de crédit,
dans lequel le premier message est un message USSD et comprend un code d'accès (Cx), le premier message étant d'abord reçu par une passerelle USSD qui route le premier message vers le serveur d'application (AS) identifié par le code d'accès (Cx),
un moyen (MM) pour envoyer une demande (Req) au dispositif de communication (CD), la demande comprenant un ordre de transfert de crédit,
un moyen pour envoyer (MM) un second message (Mes) au serveur de facturation (BS) pour effectuer un transfert de crédit de ladite somme de crédit depuis le compte tenu par l'utilisateur vers le compte tenu par le revendeur, après réception d'une réponse (Res) envoyée par le dispositif de communication (CD), si la réponse (Res) reçue comprend un code d'authentification identique au code d'authentification (Ca) compris dans le premier message reçu.

8. Programme informatique conçu pour être exécuté dans un serveur d'application (AS) pour transférer du crédit depuis un compte tenu par un utilisateur possédant un terminal mobile (MT) vers un compte tenu par un revendeur possédant un dispositif de communication (CD) et étant présent à un même endroit que l'utilisateur, les comptes étant stockés dans un serveur de facturation (BS), le serveur d'application (AS) pouvant communiquer avec le terminal mobile (MT), le dispositif de communication (CD) et le serveur de facturation (BS) via un réseau de télécommunication (TN), ledit programme comprenant des instructions qui, lorsque ledit programme est exécuté dans ledit serveur d'application, exécutent les étapes suivantes :
la réception (S2) d'un premier message envoyé par le terminal mobile (MT), le message comprenant au moins un code d'authentification (Ca) qui est une clé pré-partagée par l'utilisateur et le revendeur, un identifiant de revendeur (IdR) et une somme de crédit,
dans lequel le premier message est un message USSD et comprend un code d'accès (Cx), le premier message étant d'abord reçu par une passerelle USSD qui route le premier message vers le serveur d'application (AS) identifié par le code d'accès (Cx),
l'envoi (S3) d'une demande (Req) au dispositif de communication (CD), la demande comprenant un ordre de transfert de crédit,
après réception d'une réponse (Res) envoyée par le dispositif de communication (CD), l'envoi (S5) d'un second message (Mes) au serveur de facturation (BS) pour effectuer un transfert de crédit de ladite somme de crédit depuis le compte tenu par l'utilisateur vers le compte tenu par le revendeur, si la réponse (Res) reçue comprend un code d'authentification identique au code d'authentification (Ca) compris dans le premier message reçu.
